# FASCICULE DE BREVET EUROPEEN

(11) **EP 1 307 352 B1**
(45) Date de publication et mention de la délivrance du brevet: **28.02.2007**
(21) Numéro de dépôt: 01960564.1
(22) Date de dépôt: 26.07.2001
(51) Int. Cl.: B60C 25/00, G01M 17/007, G01V 15/00, G01M 17/02

(54) **METHODE ET DISPOSITIF DE CONTROLE DE COMPATIBILITE DES COMPOSANTS D'UN ENSEMBLE ROULANT**
VERFAHREN UND VORRICHTUNG ZUR KOMPATIBILITÄTSKONTROLLE VON DEN VERSCHIEDEN KOMPONENTEN EINER LAUFENDEN EINHEIT
METHOD AND DEVICE FOR CONTROLLING COMPATIBILITY OF COMPONENTS OF A RUNNING ASSEMBLY

(30) Priorité: 31.07.2000 FR 0010288
(43) Date de publication de la demande: 07.05.2003
(73) Titulaire: Société de Technologie Michelin, 63040 Clermont-Ferrand Cedex 09 (FR); MICHELIN Recherche et Technique S.A., 1763 Granges-Paccot (CH)
(72) Inventeur: BOULOT, Jean-Francis, F-63430 Pont du Chateau (FR)
(74) Mandataire: Dequire, Philippe Jean-Marie Denis
(86) Numéro de dépôt international: PCT/EP2001/008641
(87) Numéro de publication internationale: WO 2002/009957

(56) Documents cités:
- US-A- 5 109 213

## Description

La présente invention concerne une méthode de contrôle de compatibilité des composants d'un ensemble monté roulant, notamment d'un ensemble roulant susceptible de rouler temporairement dans des conditions de pression réduite. Elle concerne également un dispositif pour la mise en oeuvre de cette méthode.

De plus en plus, les constructeurs automobiles et les fabricants de pneumatiques tentent de prendre en compte les exigences de sécurité, de confort et de commodité sans cesse grandissante des usagers modernes de la route. Ce phénomène se manifeste par exemple par la banalisation de nombreux types de dispositifs pratiquement inexistants il y a à peine quelques années, comme par exemple les coussins de sécurité, les freins de type ABS, les dispositifs ESP, etc. Plus particulièrement dans le domaine des pneumatiques, on remarque une offre de plus en plus vaste de produits permettant la mobilité étendue, c'est-à-dire le fait de pouvoir continuer à rouler sur une certaine distance prescrite lors d'une perte de pression (partielle ou même parfois totale) d'un ou de plusieurs pneumatiques. Pour permettre le roulage en situation de perte de pression, certains types de pneumatiques utilisent des flancs renforcés, qui peuvent supporter d'importantes flexions ou déformations pour un nombre acceptable de cycles.

D'autres types d'arrangement prévoient l'utilisation d'un appui de sécurité afin de supporter l'intérieur de la bande de roulement du pneumatique lors d'une perte de pression. Avec ce type de configuration, l'insert joue un rôle de premier plan pour assurer le bon fonctionnement de l'ensemble. Encore faut-il que le bon insert soit placé dans la cavité du pneumatique lors du montage. Bien qu'il soit très peu probable qu'un insert de dimension inadéquate ou de type inexact sera inséré lors du montage en usine d'un ensemble monté neuf, ce genre de situation peut quand même (bien que de manière exceptionnelle) survenir lors d'un démontage subséquent d'un ensemble monté, si le montage n'est pas assuré par une personne véritablement compétente. Une telle personne vérifiera systématiquement la compatibilité entre eux des différents composants d'un ensemble avant le montage final.

Dans certains cas, ce mode de contrôle manuel peut éventuellement s'avérer insuffisant.

La présente invention vise à proposer une nouvelle méthode ainsi qu'un dispositif adapté permettant d'assurer de type de contrôle.

Pour ce faire, l'invention propose une méthode de contrôle automatique de compatibilité des composants d'un ensemble comprenant une jante et un pneumatique susceptible d'être monté sur ladite jante, ladite méthode consistant à:
- identifier chacun des composants de l'ensemble que l'on souhaite contrôler au moyen d'éléments d'identification vérifiables automatiquement ;
- après montage de l'ensemble, contrôler au moins deux de ces composants en effectuant une transmission des éléments d'identification correspondants dans une unité de gestion des données ;
- vérifier la compatibilité entre eux des composants correspondant aux éléments d'identification reçus par l'unité de gestion ;
- déceler toute situation dans laquelle au moins un des composants n'est pas compatible avec un ou plusieurs des autres composants ;
- générer un signal adapté en cas d'incompatibilité.

Une telle méthode permet de s'assurer que les bons composants sont assemblés entre eux pour constituer un ensemble monté. On vise ainsi un respect méticuleux des exigences techniques, par exemple concernant la capacité de roulage à pression réduite, l'autonomie atteinte, etc.

De manière avantageuse, ledit ensemble comporte également un appui de sécurité destiné à supporter au moins partiellement la bande de roulement dudit pneumatique dans des conditions de pression réduite.

La transmission des éléments d'identification correspondant à chacun des composants vers une unité de gestion des données s'effectue avantageusement grâce à une lecture/interrogation des données correspondant à chaque composant.

Selon un autre mode de réalisation, la transmission des éléments d'identification correspondant à chacun des composants vers une unité de gestion des données s'effectue grâce à une émission des données correspondant à chaque composant par une étiquette active. Il peut s'agir par exemple d'émetteurs à pile, d'étiquettes autonomes, etc. Dans ce cas, il n'y a pas d'interrogation, mais plutôt émission des données (par exemple à intervalles réguliers) des étiquettes vers un récepteur auquel est reliée l'unité de gestion.

De manière avantageuse, les éléments d'identification sont mémorisés dans des étiquettes.

Selon un exemple avantageux, lesdites étiquettes sont de type électronique et vérifiables électroniquement.

Le signal adapté en cas d'incompatibilité est avantageusement une alerte affichable sur un afficheur.

De manière préférentielle, un signal adapté ("OK") est émis lorsque toutes les conditions de compatibilité des différents composants sont respectées.

Un signal adapté est avantageusement émis en cas de non-reconnaissance d'au moins un des composants. Dans un tel cas, il est probable que cet élément sera inconnu c'est-à-dire qu'il n'est pas prévu dans la table de compatibilité comme pouvant être combiné avec un autre élément.

Selon un autre exemple avantageux, un signal approprié est émis lors de la non-détection de l'appui, ou lors de l'absence d'appui. En avertissant le conducteur de corriger la situation, on évite une situation où le système de mobilité étendue ne serait pas pleinement opérationnel.

La vérification de la compatibilité s'effectue avantageusement à l'aide d'une table de compatibilité. La table de compatibilité comprend par exemple les données de tous les composants susceptibles d'être agencés sur un même ensemble. La table de compatibilité peut de préférence être mise à jour. Ainsi par exemple, lors d'une visite d'entretien, les données de l'unité de gestion peuvent être mises à jour, afin d'intégrer les produits compatibles récemment apparus sur le marché.

Selon un exemple avantageux, la méthode comporte un pré-test simplifié consistant à comparer les composants détectés au temps T2 à ceux détectés au temps T1, où, par exemple, T1 et T2 correspondent respectivement à une première et une seconde mise sous tension de l'unité de gestion des données.

De manière avantageuse, la méthode comporte également une mesure de la pression de la cavité du pneumatique. Cette mesure de la pression peut être combinée à un test par rapport à des valeurs de référence. Ces valeurs de référence sont établies en fonction de la configuration détectée de l'ensemble et en fonction de la température.

La méthode prévoit de préférence un contrôle de la totalité des composants de toutes les roues actives du véhicule. On peut aussi simplifier le tout en omettant le contrôle d'une éventuelle roue de secours non montée pour roulage.

L'invention propose également une méthode de contrôle automatique de compatibilité des composants d'un ensemble comprenant une jante, un pneumatique susceptible d'être monté sur ladite jante et un appui de sécurité destiné à supporter au moins partiellement la bande de roulement dudit pneumatique dans des conditions de pression réduite, ladite méthode consistant à:
- identifier chacun des composants de l'ensemble que l'on souhaite contrôler au moyen d'une étiquette vérifiable automatiquement, susceptible de contenir les éléments d'identification ;
- après montage de l'ensemble, contrôler au moins deux de ces étiquettes en effectuant une transmission des éléments d'identification correspondant à ces étiquettes dans une unité de gestion des données ;
- vérifier la compatibilité entre eux des composants correspondant aux éléments d'identification reçus par l'unité de gestion ;
- déceler toute situation dans laquelle au moins un des composants n'est pas compatible avec un ou plusieurs des autres composants ;
- générer un signal adapté en cas d'incompatibilité.

Le stockage des éléments d'identification correspondant à chacune des étiquettes vers une unité de gestion des données peut s'effectuer grâce à une lecture/interrrogation des données correspondant à chaque étiquette. Cette transmission des éléments d'identification correspondant à chacune des étiquettes vers une unité de gestion des données peut aussi s'effectuer grâce à une émission des données correspondant à chaque étiquette, ces dernières étant actives.

L'invention prévoit enfin un dispositif de contrôle de compatibilité des éléments d'un ensemble comprenant une jante et un pneumatique susceptible d'être monté sur ladite jante, ledit dispositif comprenant:
- un élément d'identification associé à chacun desdits composants de l'ensemble que l'on souhaite contrôler,
- un moyen de transmission, susceptible de permettre la transmission de données entre chacun desdits composants et une unité de gestion,
- une unité de gestion susceptible :
   - d'identifier toute condition d'incompatibilité d'au moins un des composants d'un ensemble ;
   - de générer un signal correspondant à ladite condition d'incompatibilité.

Selon un exemple avantageux, chaque composant comporte une étiquette susceptible de contenir les éléments d'identification dudit composant. Les étiquettes sont par exemple de type électronique et vérifiables électroniquement.

De préférence, l'ensemble comporte un détecteur de pression susceptible de mesurer la pression à l'intérieur de la cavité du pneumatique.

Le moyen de transmission comporte de préférence une ou plusieurs antennes.

Le moyen de transmission peut être de type transpondeur ou encore de type émetteur/récepteur radio.

D'autres caractéristiques et avantages de l'invention apparaîtront à la lecture du dessin annexé, dans lequel :
la figure 1 présente un organigramme illustrant les principales étapes de la méthode selon l'invention ;
la figure 2 présente un organigramme illustrant les principales étapes d'une première variante de la méthode schématisée à la figure 1 ;
la figure 3 présente un organigramme illustrant les principales étapes d'une seconde variante de la méthode schématisée à la figure 1 ;
la figure 4 illustre une représentation schématique d'un véhicule comportant un dispositif de contrôle de compatibilité selon l'invention ;
la figure 5 est une vue en coupe transversale d'un ensemble monté comportant des éléments d'identification des composants.

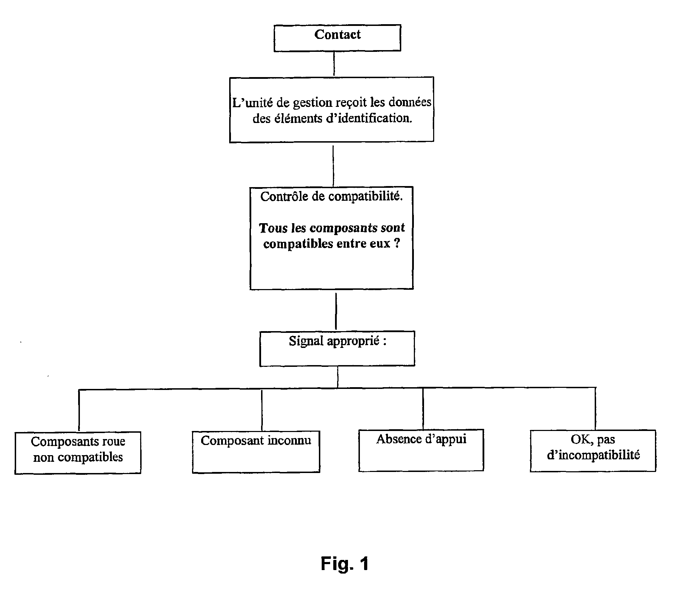

La figure 1 présente un organigramme représentant les principales étapes de la méthode de contrôle selon l'invention. L'alimentation électrique (contact) doit être assurée au niveau de l'unité de gestion avant qu'un processus de contrôle soit lancé. On peut souhaiter effectuer un contrôle de compatibilité à plusieurs reprises, ou de façon régulière, après un laps de temps pré-établi par exemple. De manière avantageuse, on réalise un contrôle au moment du démarrage du véhicule, avant tout roulage, par exemple lors de la vérification des différents éléments du véhicule tel que l'anti-démarrage, les coussins de sécurité, circuit de lubrification, etc. On évite ainsi de lancer un véhicule sur lequel on aurait récemment procédé à une révision, notamment aux niveau des roues, avec un remontage impliquant un composant incompatible avec les autres.

Le contrôle débute avantageusement par l'envoie des données ou codes correspondant aux différents composants à contrôler à l'unité de gestion. Les données ou codes peuvent correspondre par exemple à des dimensions standardisées ou caractéristiques d'un composant ou encore à une identification plus précise du type de composant ou même à un numéro de série. L'unité de gestion doit être conçue de façon à reconnaître ces données pour les traiter le plus rapidement possible.

L'unité de gestion peut ensuite procéder à l'étape proprement dite de contrôle de compatibilité. Il peut alors arriver que les données relatives à un ou plusieurs des composants ne soient pas reconnues par l'unité de gestion. Il est alors possible de prévoir l'émission d'un signal correspondant à cette situation. Le signal est ensuite traité de façon appropriée, par exemple pour produire un avertissement visuel ou sonore, destiné par exemple au conducteur du véhicule qui est alors informé de l'anomalie avec de prendre la route.

De manière avantageuse, la méthode de contrôle prévoit l'utilisation d'une table de compatibilité comprenant les données les plus complètes possible au sujet des différentes combinaisons d'agencement entre les composants existants ou connus. On retrouve de préférence les données des différents fabricants, avec les types de composants, les dimensions, etc, ainsi que les agencements admissibles. L'admissibilité peut être déterminée soit par normalisation, par notice des fabricants, etc. Dans un tel cas, le contrôle s'effectue en comparant les données reçues à celles de la table de compatibilité.

Selon une variante avantageuse, les codes ou données octroyés à chaque composant peuvent directement être utilisés par l'unité de gestion pour vérifier la compatibilité. Par exemple, des composants correspondant à certaines dimensions compatibles de jantes, d'appui et d'insert peuvent comporter des codes ou portions de codes communs ou pour lesquels il est relativement aisé de procéder à une corrélation. Dans un tel cas, l'unité de gestion compare alors directement les données ou codes des composants entre eux.

Une fois le contrôle de compatibilité effectué, l'unité de gestion, en fonction du contexte, émet ou non un ou plusieurs signaux appropriés. Par exemple, "certains composants d'un ensemble sont incompatibles", ou "composant inconnu", ou "absence d'appui", ou "roues OK".

Les signaux sont ensuite traités de façon appropriée, par exemple pour produire un avertissement visuel ou sonore, destiné par exemple au conducteur du véhicule qui est alors informé de l'anomalie avec de prendre la route.

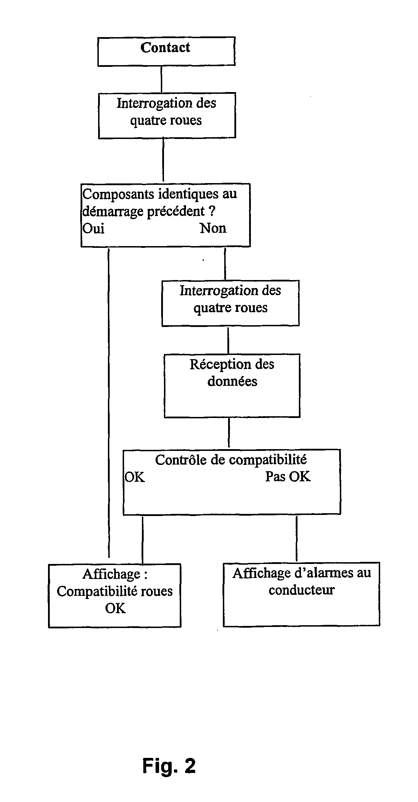

A la figure 2, la méthode est complétée par un pré-test consistant à vérifier si les composants d'une roue donnée sont les mêmes à un temps donné qu'à un moment précédent. Par exemple, lors d'un démarrage, on peut vérifier que les composants sont les mêmes qu'au démarrage précédent. Si tel est le cas, le test de compatibilité en tant que tel peut avantageusement être omis, tel qu'illustré à la figure 2.

Cette figure est par ailleurs représentative d'un mode de réalisation avantageux utilisant des transpondeurs comme élément d'identification des composants. Selon un tel mode de réalisation, afin de recevoir les données correspondant aux composants, il faut exciter ou stimuler ou alimenter le transpondeur pour que celui-ci puisse répondre, en envoyant les données. Cela est illustré à la figure 2 par les étapes d'interrogation et de réception des données. L'organe d'interrogation et celui de réception peuvent être combinés en un seul organe. Le contrôle de compatibilité peut ensuite être effectué, par exemple tel que décrit pour le cas de la figure 1. Des signaux divers, tels que ceux de la figure 1, peuvent également être émis.

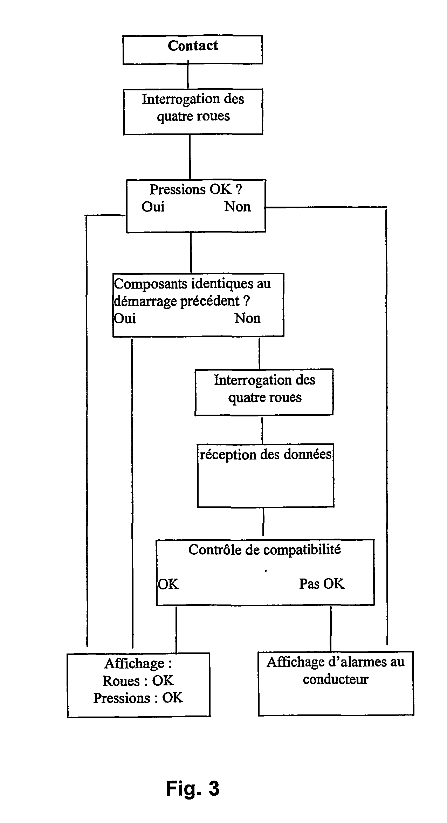

La figure 3 illustre une autre variante de la méthode selon l'invention dans laquelle on intègre une vérification de la pression. On obtient ainsi de plus amples informations sur l'état des roues et des pneumatiques du véhicule.

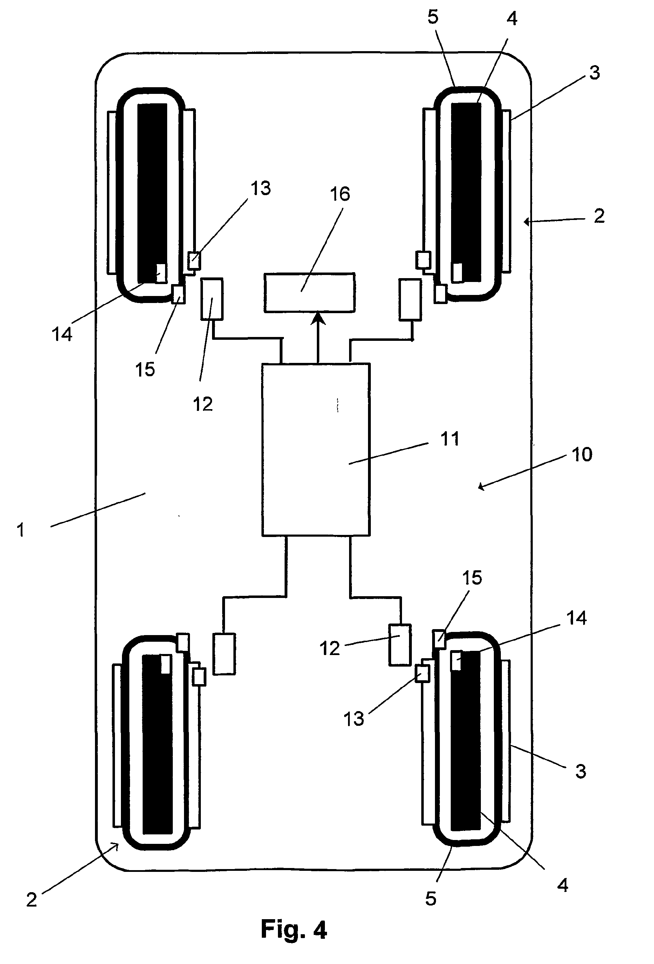

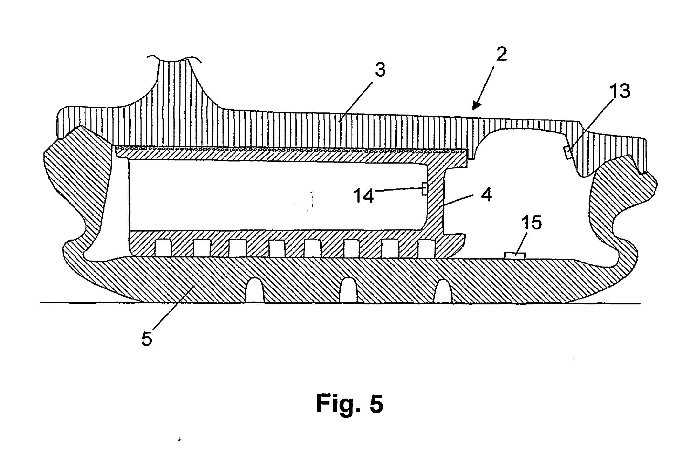

La figure 4 présente une représentation schématique d'un véhicule automobile 1, comportant quatre ensembles montés 2 ou roues. Ces ensembles montés sont particulièrement adaptés pour permettre un roulage temporaire du véhicule lors d'une chute de pression partielle ou totale d'une ou plusieurs roues. Ainsi, les ensembles montés comportent un appui 4, de type connu, illustré à la figure 5 en coupe transversale dans un ensemble monté en position de roulage à plat. Ils comportent également une jante 3 et un pneumatique 5.

Chacun des composants 3, 4 et 5 de chaque ensemble monté comporte un élément d'identification, soit l'élément d'identification de la jante 13, l'élément d'identification de l'appui 14 et l'élément d'identification du pneumatique 15. Ces éléments d'identification peuvent prendre une multiplicité de formes, comme par exemple une étiquette électronique tel un transpondeur, un élément de mémoire de type ROM ou RAM, etc.

Le véhicule 1 est équipé d'un dispositif de contrôle de compatibilité 10 selon l'invention. Ce dispositif comporte au moins un organe de transmission 12 comme par exemple une antenne avec un circuit d'excitation ou d'interrogation. Ceux-ci permettre l'échange des données avec par exemple un transpondeur. Dans un tel cas, afin de limiter l'énergie d'excitation nécessaire pour stimuler le transpondeur, il est avantageux de prévoir des antennes disposées à proximité immédiate de chacun des ensembles montés. On peut également utiliser un arrangement d'émetteurs-récepteurs de type radio: un émetteur miniature est alors disposé ou intégré dans chacun des composants et émet les données vers un seul ou une série de récepteurs, reliés à une seule ou une série d'antennes. Le dispositif comporte également une unité de gestion 11. II peut s'agir d'une unité centralisée, reliée aux quatre roues du véhicule et effectuant la gestion des informations provenant de toutes les roues, ou encore d'unités locales, affectées seulement à une seule ou deux roues par exemple. Un afficheur 16, par exemple de type sonore ou visuel tel une lampe témoin, un message apparaissant sur un écran, etc, relié à l'unité de gestion, permet d'informer le conducteur sur l'état des roues de son véhicule. Selon une variante, l'afficheur pourrait être doublé ou remplacé par un système de coupe-circuit, empêchant le démarrage du véhicule lorsqu'une situation anormale est détectée.

Un dispositif de contrôle de compatibilité de type similaire peut également être prévu hors du véhicule, pour utilisation par exemple par les mécaniciens ou même en fin de chaîne de montage chez le fabricant du véhicule.

La figure 5 illustre une vue en coupe d'un ensemble monté en position de roulage à plat. On y représente un exemple d'intégration des éléments d'identification de la jante 13, de l'appui 14 et du pneumatique 15, qui sont disposés contre une paroi du composant et maintenus par exemple par collage. Selon un autre exemple (non illustré), ces éléments sont intégrés dans l'une ou l'autre des parois du composant en question.

Selon un mode de réalisation avantageux, le dispositif de contrôle de compatibilité comporte une chaîne de transmission de données depuis les composants vers l'unité centrale fonctionnant sur la base d'étiquettes de type transpondeur. La transmission de données avec ce type de technologie est bien connue en soit. Par exemple, la demande de brevet WO 97/45277, décrit un système de transmission sans fil servant par exemple à obtenir des informations d'un capteur de pression du pneumatique. Ce système est toutefois limité à la transmission de données selon un type spécifique donné.

Selon la présente invention, on utilise un système évolué afin non seulement de transmettre des informations telles que la pression ou la température, mais également les données concernant au moins un des composants du dispositif de contrôle de compatibilité préalablement décrit. Ainsi, selon un exemple d'une architecture donnée où l'on doit transmettre des données diverses telles que d'une part les éléments d'identification de la jante, de l'appui et du pneumatique, et d'autre part des informations concernant un ou plusieurs paramètres physiques tels la pression, la température, etc, on utilise une transpondeur classique pour chacun des composants où seul des données sur l'identification sont à transmettre, et un transpondeur évolué pour le ou les composants pour lesquels en plus des données sur l'identification, on doit transmettre des données concernant un paramètre physique tel que la pression.

Un tel agencement pourrait fonctionner avec une fréquence par exemple de 2,4 Ghz, trois transpondeurs par ensemble monté, une antenne disposée à proximité immédiate de l'ensemble monté sur le véhicule et utiliser trois canaux, soit un par transpondeur. Un système de gestion centralisé assure alors le bon fonctionnement du système et assure l'envoie des éventuels messages d'alerte par exemple au cockpit de la voiture. Lorsqu'il est en fonction, le système de gestion peut gérer les interrogations, gérer les données et générer les alertes au moment opportun.

Comme un tel agencement comporte quatre antennes, réparties aux quatre coins du véhicule, l'auto-localisation est aisée à réaliser, en faisant référence par exemple à l'antenne utilisée pour transmettre les données. Connaissant la localisation de cette antenne, on peut déduire quel ensemble monté est concerné par les données reçues.

Un tel type d'agencement comporte de nombreux avantages: il n'implique pas de modification importante de l'ensemble monté lui-même ; les transpondeurs utilisés peuvent être de type autonome (sans pile); on utilise des étiquettes de technologie similaire pour toutes les données à transmettre ; on peut interroger les étiquettes à tout moment sur le véhicule ainsi que sur la machine de montage des pneumatiques (il suffit que le garagiste dispose d'un système de gestion et d'une antenne), etc.

## Revendications

1. Méthode de contrôle automatique de compatibilité des composants d'un ensemble comprenant une jante et un pneumatique susceptible d'être monté sur ladite jante, ladite méthode consistant à :
- identifier chacun des composants de l'ensemble que l'on souhaite contrôler au moyen d'éléments d'identification vérifiables automatiquement ;
- après montage de l'ensemble, contrôler au moins deux de ces composants en effectuant une transmission des éléments d'identification correspondants dans une unité de gestion des données ;
- vérifier la compatibilité entre eux des composants correspondant aux éléments d'identification reçus par l'unité de gestion ;
- déceler toute situation dans laquelle au moins un des composants n'est pas compatible avec un ou plusieurs des autres composants ;
- générer un signal adapté en cas d'incompatibilité.

2. Méthode selon la revendication 1, dans laquelle ledit ensemble comporte également un appui de sécurité destiné à supporter au moins partiellement la bande de roulement dudit pneumatique dans des conditions de pression réduite.

3. Méthode de contrôle selon l'une des revendications 1 et 2, dans laquelle la transmission des éléments d'identification correspondant à chacun des composants vers une unité de gestion des données s'effectue grâce à une lecture/interrogation des données correspondant à chaque composant.

4. Méthode de contrôle selon l'une des revendications 1 et 2, dans laquelle la transmission des éléments d'identification correspondant à chacun des composants vers une unité de gestion des données s'effectue grâce à une émission des données correspondant à chaque composant par une étiquette active.

5. Méthode de contrôle selon l'une des revendications précédentes, dans laquelle un signal adapté ("OK") est émis lorsque toutes les conditions de compatibilité des différents composants sont respectées.

6. Méthode de contrôle selon l'une des revendications précédentes, dans laquelle un signal adapté est émis en cas de non-reconnaissance d'au moins un des composants.

7. Méthode de contrôle selon l'une des revendications précédentes, dans laquelle la vérification de la compatibilité s'effectue à l'aide d'une table de compatibilité.

8. Méthode de contrôle selon la revendication 7, dans laquelle la table de compatibilité comprend les données de tous les composants susceptibles d'être agencés sur un même ensemble.

9. Méthode de contrôle selon l'une des revendications précédentes, comportant un pré-test simplifié consistant à comparer les composants détectés au temps T2 à ceux détectés au temps T1.

10. Méthode de contrôle selon la revendication 9, dans laquelle T1 et T2 correspondent respectivement à une première et une seconde mise sous tension de l'unité de gestion des données.

11. Méthode de contrôle selon l'une des revendications précédentes, comportant également une mesure de la pression de la cavité du pneumatique.

12. Méthode de contrôle selon l'une des revendications précédentes, dans laquelle on contrôle la totalité des composants de toutes les roues actives du véhicule.

13. Dispositif de contrôle de compatibilité des éléments d'un ensemble comprenant une jante et un pneumatique susceptible d'être monté sur ladite jante, ledit dispositif comprenant :
- un élément d'identification associé à chacun desdits composants de l'ensemble que l'on souhaite contrôler,
- un moyen de transmission, susceptible de permettre la transmission de données entre chacun desdits composants et une unité de gestion,
- une unité de gestion susceptible :
• d'identifier toute condition d'incompatibilité d'au moins un des composants d'un ensemble ;
• de générer un signal correspondant à ladite condition d'incompatibilité.

14. Dispositif de contrôle selon la revendication 13, dans lequel ledit ensemble comporte également un appui de sécurité destiné à supporter au moins partiellement la bande de roulement dudit pneumatique dans des conditions de pression réduite.

15. Dispositif de contrôle selon l'une des revendications 13 et 14, dans lequel chaque composant comporte une étiquette susceptible de contenir les éléments d'identification dudit composant.

16. Dispositif de contrôle selon la revendication 15, dans lequel les étiquettes sont de type électronique et vérifiables électroniquement.

17. Dispositif de contrôle selon l'une des revendications 13 à 16, dans lequel l'ensemble comporte un détecteur de pression susceptible de mesurer la pression à l'intérieur de la cavité du pneumatique.

18. Dispositif de contrôle selon l'une des revendications 13 à 17, dans lequel le moyen de transmission comporte une antenne.

19. Dispositif de contrôle selon l'une des revendications 13 à 18, dans lequel le moyen de transmission est de type transpondeur.

20. Dispositif de contrôle selon l'une des revendications 13 à 19, dans lequel le moyen de transmission est de type E/R radio.

21. Dispositif de contrôle selon l'une des revendications 13 à 20, dans lequel l'ensemble comporte un afficheur.

## Claims

1. Method for automatically controlling the compatibility of the components of an assembly comprising a rim and a tyre capable of being mounted on the said rim, the said method having the following steps:
- identifying each of the components of the assembly that it is desired to control by means of automatically checkable identification elements;
- after mounting the assembly, controlling at least two of these components by transmitting the corresponding identification elements to a data management unit;
- checking the mutual compatibility of the components corresponding to the identification elements received by the management unit;
- detecting any situation in which at least one of the components is incompatible with one or more of the other components;
- generating a suitable signal in the event of an incompatibility.

2. Control method according to Claim 1, in which the said assembly also comprises a safety support intended to at least partially support the tread of the said tyre under conditions of reduced pressure.

3. Control method according to any one of Claims 1 and 2, in which the transmission of the identification elements corresponding to each of the components to a data management unit is carried out by means of reading/interrogating the data corresponding to each component.

4. Control method according to any one of Claims 1 and 2, in which the identification elements corresponding to each of the components are transmitted to a data management unit by means of transmitting the data corresponding to each component by an active label.

5. Control method according to any one of the preceding claims, in which a suitable signal ("OK") is emitted when all the compatibility conditions of the various components are satisfied.

6. Control method according to any one of the preceding claims, in which a suitable signal is emitted in the event of non-recognition of at least one of the components.

7. Control method according to any one of the preceding claims, in which the compatibility is checked using a compatibility table.

8. Control method according to Claim 7, in which the compatibility table comprises data for all the components liable to be arranged on the same assembly.

9. Control method according to any one of the preceding claims, comprising a simplified pre-test which consists in comparing the components detected at time T2 with those detected at time T1.

10. Control method according to Claim 9, in which T1 and T2 correspond, respectively, to a first and a second powering up of the data management unit.

11. Control method according to any one of the preceding claims, also comprising a measurement of the pressure in the tire cavity.

12. Control method according to any one of the preceding claims, in which all of the components of all of the active wheels of the vehicle are controlled.

13. Device for controlling the compatibility of the elements of an assembly comprising a rim and a tyre capable of being mounted on the said rim, the said device comprising:
- an identification element combined with each of the said components of the assembly that it is desired to control,
- a transmission means, capable of allowing the transmission of data between each of the said components and a management unit,
- a management unit capable:
• of identifying any condition of incompatibility of at least one of the components of an assembly;
• of generating a signal corresponding to the said condition of incompatibility.

14. Control device according to Claim 13, in which the said assembly also comprises a safety support intended to at least partially support the tread of the said tyre under conditions of reduced pressure.

15. Control device according to any one of Claims 13 and 14 , in which each component comprises a label capable of containing the identification elements for the said component.

16. Control device according to Claim 15, in which the labels are of electronic and electronically checkable type.

17. Control device according to any one of Claims 13 to 16, in which the assembly comprises a pressure detector capable of measuring the pressure inside the tyre cavity.

18. Control device according to one of Claims 13 to 17, in which the transmission means comprises an antenna.

19. Control device according to one of Claims 13 to 18, in which the transmission means is of transponder type.

20. Control device according to one of Claims 13 to 19, in which the transmission means is of radio transmitter/ receiver type.

21. Control device according to one of Claims 13 to 20, in which the assembly comprises a display.

## Patentansprüche

1. Verfahren zur automatischen Kompatibilitätskontrolle der Komponenten einer Einheit mit einer Felge und einem Reifen, der auf der Felge montiert werden kann, wobei das Verfahren darin besteht,
- jede der Komponenten der zu kontrollierenden Einheit anhand von automatisch überprüfbaren Identifizierungselementen zu identifizieren;
- nach der Montage der Einheit mindestens zwei dieser Komponenten zu kontrollieren, indem die entsprechenden Identifizierungselemente an eine Datenverwaltungseinheit übertragen werden;
- die Kompatibilität zwischen den Komponenten zu überprüfen, die den von der Verwaltungseinheit empfangenen Identifizierungselementen entsprechen;
- jede Situation festzustellen, in der mindestens eine der Komponenten mit einer oder mehreren anderen Komponenten nicht kompatibel ist;
- im Fall von Inkompatibilität ein geeignetes Signal zu erzeugen.

2. Verfahren nach Anspruch 1, bei dem die Einheit auch eine Sicherheitsauflage aufweist, die die Lauffläche des Reifens bei verringertem Druck zumindest teilweise trägt.

3. Kontrollverfahren nach einem der Ansprüche 1 und 2, bei dem die Übertragung der den Komponenten entsprechenden Identifizierungselemente an eine Datenverwaltungseinheit mittels Einlesen/Abfragen der den Komponenten entsprechenden Daten erfolgt.

4. Kontrollverfahren nach einem der Ansprüche 1 und 2, bei dem die den Komponenten entsprechenden Identifizierungselemente durch Senden der jeder Komponente entsprechenden Daten von einem aktiven Etikett an eine Datenverwaltungseinheit übertragen werden.

5. Kontrollverfahren nach einem der vorhergehenden Ansprüche, bei dem ein geeignetes Signal ("OK") ausgesandt wird, wenn sämtliche Kompatibilitätsbedingungen der verschiedenen Komponenten erfüllt sind.

6. Kontrollverfahren nach einem der vorhergehenden Ansprüche, bei dem im Fall des Nicht-Erkennens mindestens einer Komponente ein geeignetes Signal ausgesandt wird.

7. Kontrollverfahren nach einem der vorhergehenden Ansprüche, bei dem die Überprüfung der Kompatibilität anhand einer Kompatibilitätstabelle erfolgt.

8. Kontrollverfahren nach Anspruch 7, bei dem die Kompatibilitätstabelle die Daten aller Komponenten enthält, die an einer Einheit angeordnet werden können.

9. Kontrollverfahren nach einem der vorhergehenden Ansprüche mit einem vereinfachten Vortest, bei dem die zum Zeitpunkt T2 festgestellten Komponenten mit den Komponenten verglichen werden, die zum Zeitpunkt T1 festgestellt wurden.

10. Kontrollverfahren nach Anspruch 9, bei dem T1 und T2 einem ersten beziehungsweise einem zweiten Unterspannungsetzen der Datenverwaltungseinheit entsprechen.

11. Kontrollverfahren nach einem der vorhergehenden Ansprüche mit einer Messung des Drucks in der Aushöhlung des Reifens.

12. Kontrollverfahren nach einem der vorhergehenden Ansprüche, bei dem sämtliche Komponenten aller aktiven Räder des Fahrzeugs kontrolliert werden.

13. Vorrichtung zur Kompatibilitätskontrolle der Elemente einer Einheit mit einer Felge und einem Reifen, der auf der Felge montiert werden kann, wobei die Vorrichtung Folgendes aufweist:
- ein Identifizierungselement für jede der Komponenten der zu kontrollierenden Einheit,
- ein Übertragungsmittel zum Übertragen von Daten zwischen den Komponenten und einer Verwaltungseinheit,
- eine Verwaltungseinheit, die
• jeden Zustand einer Inkompatibilität mindestens einer Komponente einer Einheit identifizieren kann;
• ein entsprechendes Signal für den Inkompatibilitäts-Zustand erzeugen kann.

14. Kontrollvorrichtung nach Anspruch 13, bei der die Einheit auch eine Sicherheitsauflage aufweist, die die Lauffläche des Reifens bei verringertem Druck zumindest teilweise trägt.

15. Kontrollvorrichtung nach einem der Ansprüche 13 und 14, bei der jede Komponente ein Etikett aufweist, das die Identifizierungselemente der Komponente enthalten kann.

16. Kontrollvorrichtung nach Anspruch 15, bei der die Etiketten elektronisch sind und sich elektronisch überprüfen lassen.

17. Kontrollvorrichtung nach einem der Ansprüche 13 bis 16, bei der die Einheit einen Drucksensor aufweist, der den Druck in der Aushöhlung des Reifens messen kann.

18. Kontrollvorrichtung nach einem der Ansprüche 13 bis 17, bei der das Übertragungsmittel eine Antenne umfasst.

19. Kontrollvorrichtung nach einem der Ansprüche 13 bis 18, bei der das Übertragungsmittel vom Typ eines Transponders ist.

20. Kontrollvorrichtung nach einem der Ansprüche 13 bis 19, bei der das Übertragungsmittel ein Funk-Sender/Empfänger ist.

21. Kontrollvorrichtung nach einem der Ansprüche 13 bis 20, bei der die Einheit eine Anzeige umfasst.
